# EUROPEAN PATENT APPLICATION

(11) **EP 2 277 613 A1**
(43) Date of publication of application: **26.01.2011**
(21) Application number: 08873788.7
(22) Date of filing: 26.11.2008
(51) Int. Cl.: B01D 33/06

(54) **ROTARY FILTRATION DEVICE**

(30) Priority: 31.03.2008 JP 2008089477
(71) Applicant: Techno Support Ltd., Osaka 562-0023 (JP)
(72) Inventor: FUKADA, Tadaaki, Minoo-shi Osaka 562-0023 (JP)
(74) Representative: Naumann, Ulrich
(86) International application number: PCT/JP2008/071394
(87) International publication number: WO 2009/122614

(57) **Abstract**

A rotary filtration device in which solid particles are prevented from adhering to a rotating container and which has a simple structure, can be manufactured at low cost, can be maintained at low cost, and has good operation efficiency. The rotary filtration device has a housing (1) into which a polishing liquid is supplied through an inflow pipe (13), the rotating container (2) having a circular hollow cylindrical shape and received in the housing (1) and incorporating a filtration material (25), a filtered-liquid discharge pipe (4) doubling as the rotating shaft of the rotating container (2) and discharging filtered polishing liquid from the inside of the rotating container (2), and a motor (5) for rotating the rotating container (2). The rotating container (2) has plate members arranged on the peripheral surface of the rotating container and also has liquid flow openings between the plate members. The polishing liquid discharged from the inflow pipe (13) flows down on the peripheral surface of the rotating container (2). The rotating container (2) is rotated while being immersed in the polishing liquid held in the housing (1). The liquid flow opening is open in the direction opposite to the direction of rotation of the rotating container (2), and this reduces the degree of adhesion of the solid particles to the liquid

## Description

### TECHNICAL FIELD

The present invention relates to a rotary filtration device for filtering a liquid including solid particles.

### BACKGROUND ART

In recycling treatment of a polishing liquid for a metal working device, waste liquid treatment in a food factory, sewage treatment in a sewage treatment plant, and the like, for example, a rotary filtration device is used to capture and recover solid particles from the liquid.

As a conventional rotary filtration device, Patent Document 1, for example, discloses a fluid filtration device including a filtration tank main body disposed to be immersed in a liquid and having a cylindrical rotating container with a peripheral face formed by a wire net and particulate filtration materials filled in the rotating container, a water collecting pipe disposed coaxially in the filtration tank main body to vacuum water in the filtration tank main body, and a motor for driving the filtration tank main body for rotation about an axis.

The fluid filtration device disclosed in the Patent Document 1 causes the liquid to flow into the filtration tank main body from the outer periphery by the operation of a pump connected to the water collecting pipe, filters the liquid by capturing suspended solids that are small-diameter solid particles with the filtration materials, and discharges the filtered water outside through the water collecting pipe. After performing such filtration operation for a certain time period, it is necessary to perform a cleaning operation of the filtration materials in order to remove the suspended solids that have accumulated in the filtration materials. More specifically, the filtration tank main body is driven by a motor for rotation to stir the filtration materials, the suspended solids captured between and on the surface of the filtration materials are separated, and the separated suspended solids are discharged out of the filtration tank main body through the metal net on the peripheral face of the rotating container.

On the other hand, Patent Document 2 discloses a rotary filtration device including a liquid tank for storing a liquid containing suspended solids, a rotating container disposed in the liquid tank and formed by a double cylinder body having an outer cylinder and an inner cylinder formed by a stainless steel net, particulate filtration materials disposed between the outer cylinder and the inner cylinder on the rotating container, a liquid discharge means for discharging the liquid in the inner cylinder of the rotating container outside, a rotating means for driving the rotating container for rotation, and a cleaning nozzle disposed above the rotating container to spray a cleaning liquid onto the filtration materials in the rotating container. In the Patent Document 2, the cleaning nozzle is formed so as to be able to reciprocate along a rail disposed above the rotating container in parallel with an axis. Furthermore, provided in the inner cylinder of the rotating container are a liquid collecting container for receiving the cleaning liquid after the cleaning of the filtration materials and a guide pipe for guiding the cleaning liquid after the cleaning from the liquid collecting container into the liquid tank.

The rotary filtration device disclosed in the Patent Document 2 causes the liquid supplied to the liquid tank to flow into the rotating container as a liquid level in the liquid tank rises, filters the liquid by capturing suspended solids with the filtration materials, and discharges the liquid outside by the liquid discharge means to perform filtration operation. After the filtration operation is performed for a predetermined time period, the cleaning operation of the filtration materials is performed. More specifically, the rotating container is rotated by the rotating means to face a portion that has been immersed in the liquid to the cleaning nozzle and the cleaning nozzle reciprocates in an axial direction while spraying the cleaning liquid to clean the filtration materials. By alternately repeating the rotation of the rotating container and the cleaning of the portion facing the cleaning nozzle, the entire portion of the rotating container and the filtration materials that have been immersed in the liquid are cleaned. The cleaning liquid that has cleaned the filtration materials and includes the suspended solids is guided into the liquid tank and the suspended solids settle at a lower portion of the liquid tank. The suspended solids that have settled at the lower portion of the liquid tank are to be discharged out of the liquid tank by operating a valve provided at the lower portion of the liquid tank.
Patent Document 1: Japanese Unexamined Patent Publication No. H10-323510
Patent Document 2; Japanese Unexamined Patent Publication No. 2001-120911

### DISCLOSURE OF THE INVENTION

### PROBLEMS TO BE SOLVED BY THE INVENTION

However, there has been a problem in that large-diameter solid particles which do not pass through the net adhere to the peripheral face of the rotating container, the adhered solid particles obstruct the flow of the liquid and it may reduce filtration efficiency because each of the conventional the filtration devices described above has the peripheral face of the rotating container formed by the net. The solid particles adhered to the rotating container adhere to the net due to the flow of the liquid passing through the rotating container in many cases and it is difficult to remove the adhered solid particles by the cleaning operation in any of the conventional filtration devices.

The rotary filtration device disclosed in the Patent Document 2 can remove the solid particles adhered to the rotating container by the cleaning operation. However, there has been a problem in that a structure of the device is complicated which results in increasing manufacturing cost because a drive mechanism of the cleaning nozzle, a supply mechanism of the cleaning liquid, and the like are necessary. Moreover, there has been a problem that maintenance cost Increases as well because the cleaning liquid for performing the cleaning operation is necessary. Furthermore, there has been a problem that it may reduce time for the filtration operation as well as the operation efficiency because the cleaning operation takes considerable time by alternately repeating the rotation of the rotating container and the cleaning of the portion facing the cleaning nozzle.

The present invention has been made with the above circumstances in view and it is an object thereof to provide a rotary filtration device, wherein it is possible to prevent the adhesion of solid particles to a rotating container, manufacturing cost is relatively low with its simple structure, maintenance cost is low, and the operation efficiency is high.

### MEANS FOR SOLVING THE PROBLEMS

In order to achieve the above object, a rotary filtration device according to a first invention comprises; a liquid tank to which a liquid to be filtered is supplied; a rotating container which is rotatably disposed in the liquid tank, substantially cylindrical in shape and incorporates a filtration material for filtering the liquid; a discharge portion for discharging the liquid filtered by the filtration material from the rotating container to the outside of the liquid tank; and a drive portion for driving the rotating container for rotation, wherein the rotating container includes, on a peripheral face, a plurality of liquid flow openings open in the opposite direction to a rotating direction.

In the first invention, the liquid is supplied into the liquid tank and the rotating container is driven for rotation by the drive portion. The liquid in the liquid tank flows into the rotating container through the plurality of liquid flow openings of the rotating container driven for rotation. The liquid that has flowed into the rotating container is filtered by the filtration material and the filtered liquid is discharged from the rotating container to the outside of the liquid tank by the discharge portion. Because the liquid flow openings of the rotating container are open in the direction opposite to the rotating direction of the rotating container, large-diameter solid particles included in the liquid are not vacuumed from the liquid flow openings as compared with the conventional rotating container in which the net is provided on the peripheral face. Therefore, the large-diameter solid particles do not adhere to the rotating container and it is possible to reduce frequency of clogging, As a result, the flow of the liquid is not obstructed by the adhered solid particles and it is possible to prevent reduction in the filtration efficiency from occurring.

Moreover, because it is possible to prevent the adhesion of the solid particles without using the drive mechanism of the cleaning nozzle and the supply mechanism of the cleaning liquid as in a conventional way, it is possible to manufacture the device at lower cost than the conventional device with its simpler structure. Furthermore, because the effort of removing the solid particles adhered to the rotating container can be saved significantly, it is possible to shorten maintenance time and thereby to provide the rotary filtration device with high operation efficiency.

Further, according to a second invention, the rotary filtration device in the first invention is **characterized in that** the rotating container includes a plurality of plate members, at least a part of which has an inclined face inclined in the direction of a tangent of the peripheral face and which are arranged in the circumferential direction, and the liquid flow openings are formed respectively between the plurality of plate members.

In the second invention, the rotating container includes the plurality of plate members, at least a part of which has the inclined face inclined in the direction of the tangent of the peripheral face and which are arranged in the circumferential direction, and the liquid flow openings are formed between the plurality of plate members. When the rotating container rotates and accordingly the plate members rotate in the ciroumferential direction, centrifugal force is applied to the solid particles from the inclined face of the plate members. As a result, it is possible to repel the large-diameter solid particles from the liquid flow openings and thereby to prevent the adhesion of the large-diameter solid particles to the liquid flow openings from occurring.

According to a third invention, the rotary filtration device in the second invention is **characterized in that** each of the plate members has a peripheral face portion extending in the direction of the tangent of the peripheral face of the rotating container, and an inclined face portion provided between the peripheral face portion and the peripheral face of the rotating container, and the alit-shaped liquid flow opening is formed between a tip end portion of the peripheral face portion of one plate member and the inclined face portion of another plate member adjacent to the one plate member in the direction opposite to the rotating direction of the rotating container.

In the third invention, each of the plate members of the rotating container consists of the peripheral face portion extending in the direction of the tangent of the peripheral face and the inclined face portion provided between the peripheral face portion and the peripheral face of the rotating container. The slit-shaped liquid flow opening is formed between the tip end portion of the peripheral face portion of one plate member and the inclined face portion of another plate member adjacent to the one plate member in the direction opposite to the rotating direction of the rotating container. Accordingly, the liquid flow openings open in the direction opposite to the rotating direction can be formed on the peripheral face of the rotating container and the centrifugal force can be applied to the solid particles from the inclined face portions of the plate members as the rotating container rotates. Therefore, the large-diameter solid particles are less vacuumed to the liquid flow openings and it is possible to repel the large-diameter solid particles from the liquid flow openings and thereby to prevent the adhesion of the large-diameter solid particles to the liquid flow openings from occurring,

Furthermore, according to a fourth invention, the rotary filtration device in one of the first to third inventions is **characterized in that** a settlings discharge pipe for discharging settlings is connected to a lower portion of the liquid tank.

In the fourth invention, the settlings discharge pipe for discharging the settlings is connected to the lower portion of the liquid tank. As a result, the settlings such as the large-diameter solid particles which have not adhered to the rotating container but remained in the liquid and settled at the lower portion of the liquid tank can be discharged outside through the settlings discharge pipe.

### EFFECTS OF THE INVENTION

With the structure described above, because the liquid flow openings of the rotating container are open in the opposite direction to the rotating direction of the rotating container, the large-diameter solid particles included in the liquid are not vacuumed from the liquid flow openings as compared with the conventional rotating container in which the net is provided on the peripheral face. Therefore, the large-diameter solid particles do not adhere to the rotating container and it is possible to reduce frequency of clogging. As a result, the flow of the liquid is not obstructed by the adhered solid particles and it is possible to prevent reduction of the filtration efficiency from occurring.

Because it is possible to prevent the adhesion of the solid particles without using the drive mechanism of the cleaning nozzle and the supply mechanism of the cleaning liquid as in a conventional way, it is possible to manufacture the device at lower cost than the conventional device with its simpler structure. Furthermore, because the effort of removing the solid particles adhered to the rotating container can be saved significantly, it is possible to shorten maintenance time and thereby to provide the rotary filtration device with high operation efficiency.

### BRIEF DESCRIPTION OF THE DRAWINGS

FIGS. 1(a) and 1(b) are a side view and a front view of a rotary filtration device according to an embodiment of the present invention, respectively.
FIG. 2 is a plan sectional view of the rotary filtration device according to the embodiment of the invention.
FIG. 3 is a perspective view of a rotating container of the rotary filtration device according to the embodiment of the invention.
FIG. 4 is a partial sectional view in the direction perpendicular to a rotary shaft of the rotating container of the rotary filtration device according to the embodiment of the invention.
FIG. 5 is a perspective view of a bracket of the rotating container of the rotary filtration device according to the embodiment of the invention.

### DESCRIPTION OF SYMBOLS

- 1: housing (liquid tank)
- 2: rotating container
- 3: drive shaft
- 4: filtered liquid discharge pipe
- 5: motor
- 6: settlings discharge pipe
- 13: inflow pipe
- 24: plate member
- 24a: peripheral face portion
- 24b: inclined portion.
- 29: liquid flow opening

### BEST MODE FOR CARRYING OUT THE INVENTION

A rotary filtration device according to an embodiment of the present invention will be described below in detail with reference to the drawing. Described as an example in the embodiment is a rotary filtration device used by being connected to a polishing device as a metal working device to filter a polishing liquid after polishing treatment discharged from the polishing device and capture and recover polishing wastes and polishing materials as solid particles.

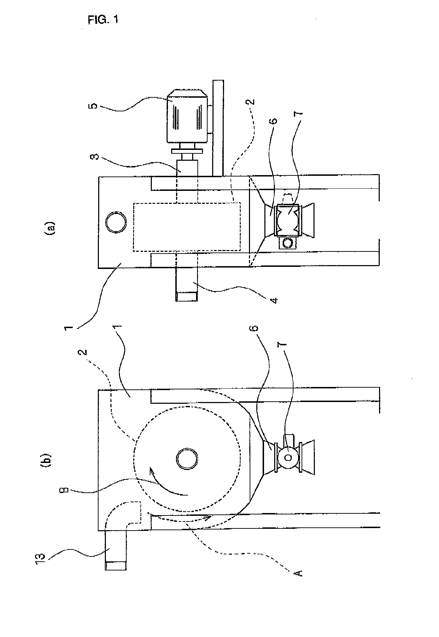

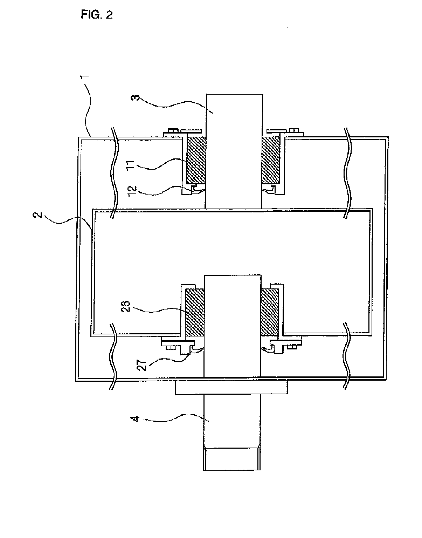

FIG. 1(a) is a side view of the rotary filtration device according to the embodiment of the invention, and FIG. 1(b) is a front view of the rotary filtration device according to the embodiment of the invention. FIG. 2 is a plan sectional view of the rotary filtration device according to the embodiment of the invention.

As shown in FIG. 1(a), the rotary filtration device according to the embodiment of the invention includes a housing 1 serving as a liquid tank which is substantially rectangular parallelepiped in shape, a rotating container 2 which is substantially cylindrical in shape and rotatably housed in the housing 1, a drive shaft 3 fixed on one end face of the rotating container 2 and protruding from a back face of the housing 1, a filtered liquid discharge pipe 4 serving as a discharge portion passing through the other end face of the rotating container 2 to discharge a polishing liquid after filtration in the rotating container 2 to the outaide of the housing 1, a motor 5 connected to the drive shaft 3, a settlings discharge pipe 6 connected to a bottom face of the housing 1, and a butterfly valve 7 interposed in the settlings discharge pipe 6.

The housing 1 has a lower portion formed in arc shape concentric with the rotating container 2 as shown in FIG. 1 (b) . A lower end portion of the housing 1 is formed in taper shape reduced in cross-sectional area and is connected to the settlings discharge pipe 6. Through holes are provided on a front face and a back face of the housing 1 and a wood bearing 11 for supporting the drive shaft 3 is provided to be adjacent to the through hole on the back face as shown in FIG. 2.

A rotary shaft seal 12 for sealing between the outer peripheral face of the drive shaft 3 and the wood bearing 11 is provided to be adjacent to the wood bearing 11 on the inner side of the housing 1. The filtered liquid discharge pipe 4 is inserted through the through hole on the front face of the housing 1 and fixed thereto. An inflow pipe 13 for guiding the polishing liquid from the polishing device is provided on an upper portion of a side face of the housing 1 and a tip end portion of the inflow pipe 13 is bent in the housing 1. In this way, the polishing liquid discharged from an opening at the tip end of the inflow pipe 13 flows down along a peripheral face of the rotating container 2 as shown by an arrow A. The housing 1 has a sealed structure so as to maintain pressure of the polishing liquid pumped from the polishing device.

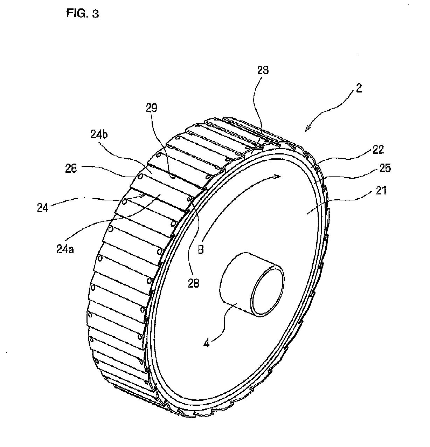

FIG. 3 is a perspective view of the rotating container of the rotary filtration device according to the embodiment of the invention. FIG, 4 is a partial sectional view in the direction perpendicular to a rotary shaft of the rotating container of the rotary filtration device according to the embodiment of the invention. As shown in FIG. 3, the rotating container 2 of the rotary filtration device according to the embodiment comprises two diac-ahaped end face plates 21, 21 forming both end faces of the cylindrical shape, an annular frame 22 connected to an outer periphery of the respective end face plates 21, a plurality of brackets 23, 23, ... arranged in the circumferential direction on an outer periphery of the annular frame 22, and a plurality of plate members 24, 24, ... fixed to the respective brackets 23 and arranged in the circumferential direction. On an inner-diameter side of the plurality of plate members 24, 24, ..., a filtration material 25 consisting of a stainless steel net formed in a cylindrical shape is housed.

While the drive shaft 3 is fixed to an outer side face of one end face plate 21, a through hole through which the filtered liquid discharge pipe 4 is inserted is provided on the other end face plate 21. A wood bearing 26 is provided adjacent to the through hole inside the other end face plate 21 as shown in FIG. 2, and the other end face plate 21 side of the rotating container 2 is supported by the filtered liquid discharge pipe 4 through the wood bearing 26. A rotary shaft seal 27 for sealing between an outer peripheral face of the filtered liquid discharge pipe 4 and the wood bearing 26 is provided on the wood bearing 26 on the outside of the rotating container 2.

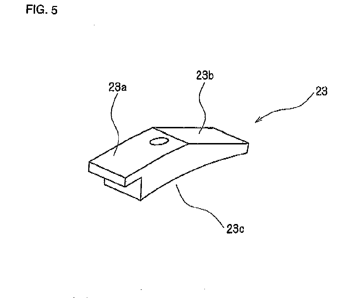

FIG. 5 is a perspective view of the bracket of the rotating container of the rotary filtration device according to the embodiment of the invention. As shown in FIG. 5, the bracket 23 consists of a plate-shaped body having a flat trapezoidal section and comprises a bottom face 23c curved so as to come in close contact with the outer peripheral face of the annular frame 22, a top face 23a substantially parallel to the bottom face 23c, and an inclined face 23b inclined at 10 to 20 degrees with respect to the top face 23a. The bracket 23 is fixed to the annular frame 22 in such a manner that the inclined face 23b is positioned in the rotating direction with respect to the top face 23a, An edge portion of the top face 23a of the bracket 23 protrudes further in the opposite direction to the rotating direction than the edge portion of the bottom face 23c. In this way, when the brackets 23 are disposed while overlapping with the annular frame 22, the edge portion of the top face 23a of the bracket 23 protrudes toward an outer-diameter side of the edge portion of the inclined face 23b of the adjacent bracket 23 in the opposite direction to the rotating direction of the rotating container 2.

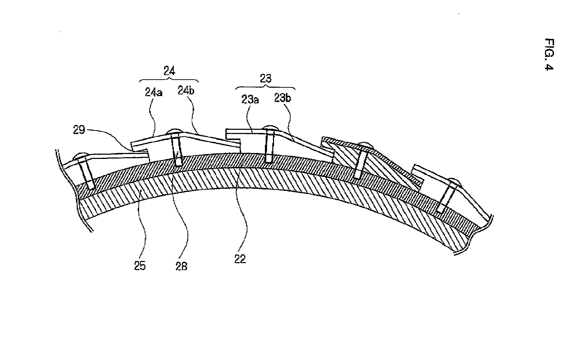

Referring back to FIGS. 3 and 4, the plate member 24 has a long and narrow rectangular shape extending parallel to the rotary shaft and is fixed by screws 28 screwed down into the annular frame 22 through the brackets 23. The plate member 24 comprises a peripheral face portion 24a substantially parallel to the direction of a tangent of the peripheral face of the rotating container 2 and an inclined portion 24b inclined with respect to the direction of the tangent of the peripheral face of the rotating container 2. The inclined portion 24b of the plate member 24 is inclined at 10 to 20 degrees with respect to the peripheral face portion 24a. The peripheral face portion 24a and the inclined portion 24b are formed to be substantially the same in length in the circumferential direction.

The plate member 24 is fixed to the bracket 23 in such a manner that the peripheral face portion 24a is laid along the top face 23a of the bracket 23 and that the inclined portion 24b is laid along the inclined face 23b of the bracket 23. The plate member 24 is fixed so that the inclined portion 24b is positioned closer to the rotating direction of the rotating container 2 than the peripheral face portion 24a and that the inclined portion 24b is inclined more toward an inner-diameter side as it is closer to the rotating direction. The plurality of plate members 24, 24, ... fixed to the brackets 23 are arranged so that the inclined portions 24b, 24b, ... and the peripheral face portions 24a, 24a, ... overlap each other in the circumferential direction and that end portions of the peripheral face portions 24a, 24a, ... are positioned on the outer-diameter side of the end portions of the inclined portions 24b, 24b, ... between the adjacent plate members 24, 24, .... As a result, slit-ehaped liquid flow openings 29, 29, ... open in the opposite direction to the rotating direction of the rotating container 2 are formed between the inclined portions 24b, 24b, ... and the peripheral face portions 24a, 24a, ... of the adjacent plate members 24, 24, ....

The filtered liquid discharge pipe 4 fixed through the through hole on the front face of the housing 1 for supporting the rotating container 2 rotatably in the housing 1 is provided at the tip end in the rotating container 2 with an opening for vacuuming and discharging the polishing liquid outside. The filtered liquid discharge pipe 4 is connected to a liquid feed pump (not shown) and the polishing liquid after filtration in the rotating container 2 is vacuumed by the liquid feed pump and discharged outside the rotary filtration device. The discharged polishing liquid is returned to the polishing device and reused for the polishing treatment. In this way, it is configured in such a manner that the polishing liquid circulates between the polishing device and the rotary filtration device.

operation of the rotary filtration device having the above structure will be described below. As the polishing device starts operating, the motor 5 of the rotary filtration device is started to drive the rotating container 2 for rotation through the drive shaft 3 as shown by an arrow B. The liquid feed pump (not shown) is started to vacuum the liquid in the housing 1 through the filtered liquid discharge pipe 4.

The polishing liquid used for the polishing treatment of a workpiece in the polishing device is led into the housing 1 thorough the inflow pipe 13 with solid particles included such as the polishing wastes of the workpiece, the polishing materials, and grindstone wastes. The polishing liquid led into the inflow pipe 13 is discharged from the opening of the inflow pipe 13 into the housing 1 and flows down while being in contact with the peripheral face of the rotating container 2. On the peripheral face of the rotating container 2, the flowing direction of the polishing liquid and the rotating direction of the peripheral face of the rotating container 2 are opposite to each other. The polishing liquid that has flowed down along the peripheral face of the rotating container 2 is stored in a bottom portion of the housing 1, a liquid level in the housing 1 rises, and a lower half of the rotating container 2 is immersed in the polishing liquid.

The polishing liquid stored in the housing 1, the polishing liquid flowing down along the peripheral face of the rotating container 2, and the like flow into the rotating container 2 through the liquid flow openings 29 of the rotating container 2 and the filtration material 25 captures the solid particles such as the polishing wastes and the polishing materials included in the polishing liquid to filter the polishing liquid. The filtered polishing liquid is vacuumed in from the tip end of the filtered liquid discharge pipe 4 open inside the filtration material 25 of the rotating container 2 and discharged outside the rotary filtration device through the filtered liquid discharge pipe 4. on the other hand, mainly large-diameter solid particles that do not flow into the liquid flow openings 29 settle at the bottom portion in the housing 1 and are recovered to the taper-shaped lower end portion, The solid particles recovered to the lower end portion of the housing 1 are discharged outside through the settlings discharge pipe 6 by opening the butterfly valve 7.

Because the liquid flow openings 29 of the rotating container 2 are directed in the opposite direction to the rotating direction of the rotating container 2, the large-diameter solid particles included in the polishing liquid are less vacuumed to the liquid flow openings 29 as compared with the conventional rotating container in which the net having the openings is provided on the peripheral face. Moreover, centrifugal force is applied to the solid particles from the inclined portions 24b of the plate members 24 as the plate members 24 arranged on the outer periphery of the rotating container 2 rotate and it is possible to effectively repel the large-diameter solid particles from the liquid flow openings 29. Therefore, the large-diameter solid particles do not adhere to the liquid flow openings 29, the flow of the polishing liquid at the liquid flow openings 29 is not obstructed, and it is possible to prevent reduction of the filtration efficiency of the polishing liquid from occurring.

With the rotary filtration device according to the embodiment, the conventional mechanism such as the drive mechanism of the cleaning nozzle, the supply mechanism of the cleaning liquid and the like are unnecessary and therefore it is possible to provide the rotary filtration device with simple structure at low cost which can prevent the solid particles from adhering to the rotating container 2. Moreover, because the effort of removing the solid particles adhered to the rotating container 2 can be saved, it is possible to reduce frequency of maintenance and thereby to provide the rotary filtration device with high operation efficiency.

If the polishing liquid after the polishing treatment is filtered by the rotary filtration device and reused in the polishing device as in the embodiment, a flow for circulating the polishing materials is formed between the polishing device and the rotary filtration device. Therefore, if the solid particles adhere to the liquid flow openings 29 of the rotating container 2, the following problem occurs. The adhesion of the solid particles increases a loss of flow rates at the liquid flow openings 29 and a load on the liquid feed pump. To allow for such loss of the flow rates at the liquid flow openings 29 and secure the flow rates of the polishing liquid, the liquid feed pump and a diameter of piping of the polishing liquid need to be increased in size for example, which causes an increase in cost for the polishing device and the rotary filtration device. Moreover, if pressure applied onto the polishing liquid by the liquid feed pump is increased in order to supplement the loss of the flow rates at the liquid flow openings 29, it causes an increase in temperature of the polishing liquid, which may adversely affect working accuracy of the workpiece in the polishing device.

On the other hand, with the rotary filtration device according to the embodiment, it is possible to prevent the adhesion of the solid particles at the liquid flow openings 29, to effectively and stably keep the loss of the flow rates in the liquid flow openings 29 low, and thereby to prevent the problem described above effectively. In other words, it is possible to keep the working accuracy of the polishing device stable and satisfactory without causing the increase in cost for the polishing device, the rotary filtration device, and the like.

Although the bent plate members 24 having the peripheral face portions 24a and the inclined portions 24b are arranged on the peripheral face of the rotating container 2 in the embodiment described above, it is needless to say that flat plate members may be arranged while being inclined with respect to the direction of the tangent.

Although the slit-shaped liquid flow openings 29 are formed respectively between the plate members 24 arranged on the peripheral face of the rotating container 2 in the embodiment described above, the liquid flow openings are not limited to be formed in slit shape but may be formed in various shapes such as rectangles and circles. For example, the peripheral face of the rotating container 2 may be formed with a cylindrical plate member and the liquid flow openings 29 may be formed by providing a plurality of through holes on the plate member and mounting eave-shaped members having an openings open in the opposite direction to the rotating direction of the rotating container 2 to edges of the provided through holes.

Although the rotary filtration device is used for filtration of the polishing liquid discharged from the polishing device in the embodiment described above, it may be used for filtration of a liquid discharged from other metal working devices. Moreover, the rotary filtration device of the invention can be applied not only to the treatment of the liquid discharged from the metal working device but also to other uses such as waste liquid treatment in a food factory and a sewage treatment in a sewage treatment plant.

## Claims

1. A rotary filtration device comprising:
a liquid tank to which a liquid to be filtered is supplied;
a rotating container which is rotatably disposed in the liquid tank, substantially cylindrical in shape and incorporates a filtration material for filtering the liquid;
a discharge portion for discharging the liquid filtered by the filtration material from the rotating container to the outside of the liquid tank; and
a drive portion for driving the rotating container for rotation, wherein
the rotating container includes, on a peripheral face, a plurality of liquid flow openings open in the opposite direction to a rotating direction.

2. The rotary filtration device according to claim 1, wherein
the rotating container includes a plurality of plate members, at least a part of which has an inclined face inclined in the direction of a tangent of the peripheral face and which are arranged in the circumferential direction, and
the liquid flow openings are formed respectively between the plurality of plate members.

3. The rotary filtration device according to claim 2, wherein
each of the plate members has a peripheral face portion extending in the direction of the tangent of the peripheral face of the rotating container, and an inclined face portion provided between the peripheral face portion and the peripheral face of the rotating container, and
the slit-shaped liquid flow opening is formed between a tip end portion of the peripheral face portion of one plate member and the inclined face portion of another plate member adjacent to the one plate member in the direction opposite to the rotating direction of the rotating container.

4. The rotary filtration device according to any one of claims 1 to 3, wherein a settlings discharge pipe for discharging settlings is connected to a lower portion of the liquid tank.
